# EUROPEAN PATENT APPLICATION

(11) **EP 4 653 123 A1**
(43) Date of publication of application: **26.11.2025**
(21) Application number: 23917789.2
(22) Date of filing: 28.12.2023
(51) Int. Cl.: B23K 26/08

(54) **LASER PROCESSING SYSTEM**

(30) Priority: 16.01.2023 JP 2023004402
(71) Applicant: Amada Co., Ltd., Isehara-shi, Kanagawa 259-1196 (JP)
(72) Inventor: ASOU, Suguru, Isehara-shi, Kanagawa 259-1196 (JP); IIDAKA, Makoto, Isehara-shi, Kanagawa 259-1196 (JP)
(74) Representative: Grünecker Patent- und Rechtsanwälte PartG mbB
(86) International application number: PCT/JP2023/047170
(87) International publication number: WO 2024/154579

(57) **Abstract**

A laser processing system (ST) includes a first laser processing unit (LU1) and a second laser processing unit (LU2). The first laser processing unit is provided with a pivot table unit (93) having a pivot table (931) that holds a first workpiece to be processed by a laser beam and a drive unit (932) that drives the pivot table. The second laser processing unit is provided with a pair of rail units (94, 95) laid parallel with the pivot table unit interposed therebetween and a work table (3). The work table has a workpiece support unit (32G, 32BG) that supports a second workpiece to be processed by a laser beam, a table base (31) that supports the workpiece support unit, posts (312a-d) that support the table base, and wheels (313, 314) that roll on the pair of rail units. The work table is configured so that only the wheels are in contact with the pair of rail units when the table base is installed above the pivot table unit.

## Description

### [TECHNICAL FIELD]

The present invention relates to a laser processing system.

### [BACKGROUND ART]

A laser beam is used for a two-dimensional processing for processing a flat-plate workpiece such as a sheet metal or a rod-shaped workpiece such as a pipe (hereinafter referred to as "2D processing"), and for a three-dimensional processing for processing a three-dimensional workpiece modeled three-dimensionally (hereinafter referred to as "3D processing"). Generally, a laser processing machine made for 2D processing is used in 2D processing, and a laser processing machine made for 3D processing is used in 3D processing. A Patent Literature 1 listed below discloses a laser processing machine for 2D processing of a rod-shaped workpiece.

### [Citation List]

### [Patent Literature]

**[Patent Literature 1]** Japanese Granted Patent Application Publication No. 5645595

### [SUMMARY OF INVENTION]

It is desired to be able to perform both 2D processing and 3D processing with a single laser processing machine in view of reducing an installation space of the machine, setup man-hours for starting up the machine, and man-hours for maintenance of the machine. However, when 2D processing and 3D processing are performed with a single laser processing machine, a changeover operation between a table for 2D processing, which holds a flat-plate workpiece in a horizontal position, and a table for 3D processing, which holds a three-dimensional workpiece with its posture changeable, becomes a complicated and difficult operation. In addition, an operation for adjusting a position of the workpiece is also becomes a complicated and difficult operation. Therefore, it is expected to achieve an easy changeover between 2D processing and 3D processing in a single laser processing machine.

An aspect of the present invention provides a laser processing system that includes a first laser processing unit provided with a pivot table unit having a pivot table that holds a first workpiece to be processed by a laser beam and a drive unit that changes a posture of the pivot table at least in a horizontal posture thereof; and a second laser processing unit provided with a pair of rail units laid parallel with the pivot table unit interposed therebetween and a work table, wherein the work table has a workpiece support unit that supports a second workpiece to be processed by a laser beam, a table base that supports the workpiece support unit, posts that support the table base, and wheels that roll on the pair of rail units, and wherein the work table is configured so that only the wheels are in contact with the pair of rail units when the table base is installed above the pivot table unit.

According to the aspect of the present invention, it becomes possible to achieve an easy changeover between 2D processing and 3D processing in a single laser processing machine.

### [BRIEF DESCRIPTION OF DRAWINGS]

**[****FIG. 1]** FIG. 1 is a perspective view of a laser processing machine 91 of a laser processing system according to an embodiment.
**[****FIG. 2A]** FIG. 2A is a perspective view showing a state where partitions 911 of the laser processing machine 91 are removed.
**[****FIG. 2B]** FIG. 2B is a front view showing a catcher 81 included in the laser processing machine 91.
**[****FIG. 3]** FIG. 3 is a perspective view showing a pivot table unit 93 included in the laser processing machine 91.
**[****FIG. 4A]** FIG. 4A is a front view showing a flat rail unit 94 included in the laser processing machine 91.
**[****FIG. 4B]** FIG. 4B is a plan view showing a front portion of the flat rail unit 94.
**[****FIG. 4C]** FIG. 4C is a front view showing a rod rail unit 95 included in the laser processing machine 91.
**[****FIG. 4D]** FIG. 4D is a plan view showing a front portion of the rod rail unit 95.
**[****FIG. 5A]** FIG. 5A is a perspective view showing a table carriage unit 1 including a plate-adapted table 3A, as a work table 3, to be installed in the laser processing machine 91.
**[****FIG. 5B]** FIG. 5B is a perspective view showing the table carriage unit 1 including a rod-adapted table 3B, as a work table 3, to be installed in the laser processing machine 91.
**[****FIG. 6A]** FIG. 6A is a perspective view showing the work table 3 separated from a dolly 2.
**[****FIG. 6B]** FIG. 6B is a perspective view showing the dolly 2 separated from the work table 3.
**[****FIG. 6C]** FIG. 6C is a plan view of a portion indicated by an arrow VIC in FIG. 6B.
**[****FIG. 7A]** FIG. 7A is a rear view showing a caster 21d of the table carriage unit 1 and its vicinity.
**[****FIG. 7B]** FIG. 7B is a rear view showing a caster 21c of the table carriage unit 1 and its vicinity.
**[****FIG. 8A]** FIG. 8A is a schematic right side view showing a state where the table carriage unit 1 is connected to the laser processing machine 91.
**[****FIG. 8B]** FIG. 8B is a schematic right-side view showing a state where the work table 3 has been moved into the laser processing machine 91 from the state shown in FIG. 8A.
**[****FIG. 9A]** FIG. 9A is a front view showing a front left portion of the work table 3 that has been moved into the laser processing machine 91.
**[****FIG. 9B]** FIG. 9B is a plan view showing a left-side joint portion of the dolly 2 connected to the laser processing machine 91.
**[****FIG. 10A]** FIG. 10A is a front view showing a front right portion of the work table 3 that has been moved into the laser processing machine 91.
**[****FIG. 10B]** FIG. 10B is a plan view showing a right-side joint portion of the dolly 2 connected to the laser processing machine 91.
**[****FIG. 11]** FIG. 11 is a left side view showing the right-side joint portion of the dolly 2 connected to the laser processing machine 91.
**[****FIG. 12A]** FIG. 12A is a perspective view showing a table locking device 98 included in the laser processing machine 91.
**[****FIG. 12B]** FIG. 12B is a plan view showing a state where a table base 31 of the work table 3 is locked by the table locking device 98.
**[****FIG. 13]** FIG. 13 is a schematic front view for explaining height relationship between the work table 3 and the pivot table unit 93.
**[****FIG. 14A]** FIG. 14A is a flowchart of a changeover from 3D processing using the pivot table unit 93 to 2D processing using the plate-adapted table 3A.
**[****FIG. 14B]** FIG. 14B is a flowchart of a changeover from 2D processing using the plate-adapted table 3A to 3D processing using the pivot table unit 93.

### [DESCRIPTION OF EMBODIMENTS]

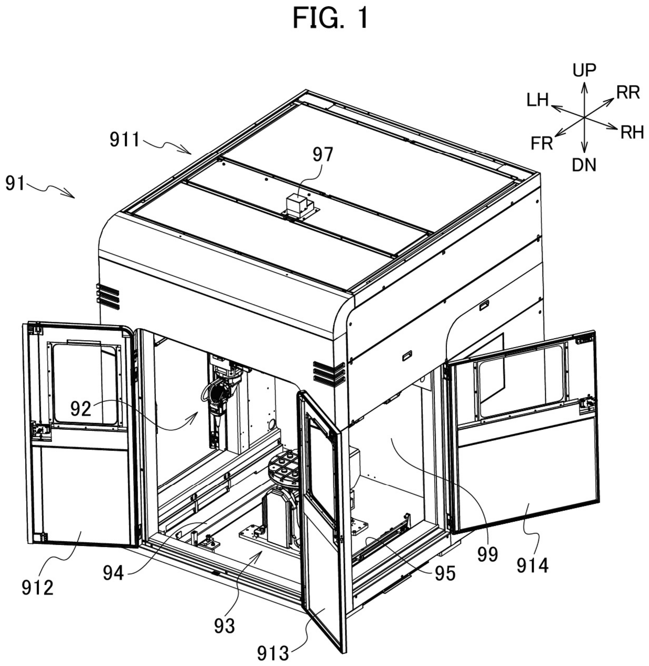

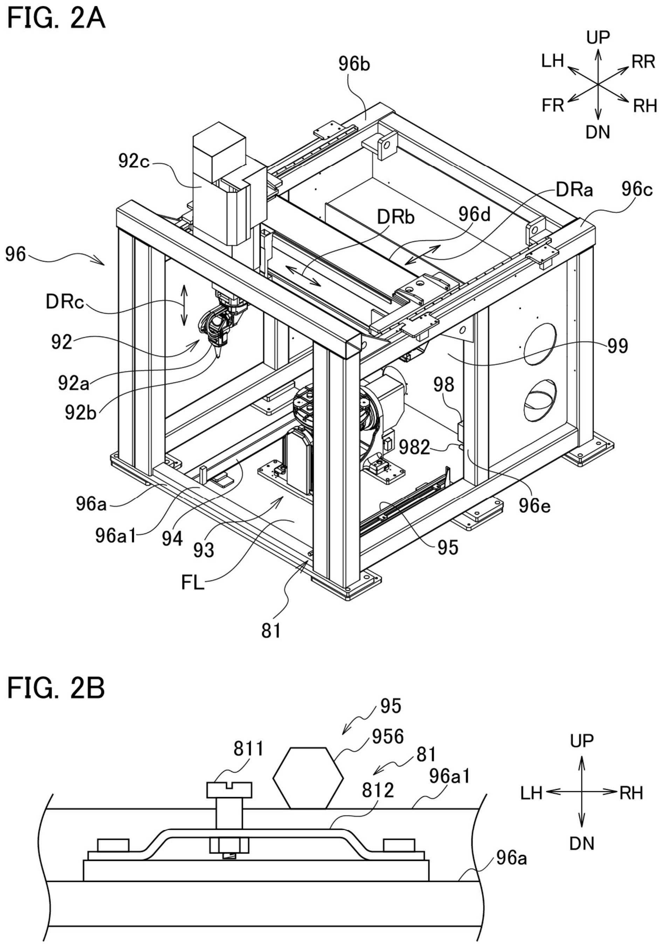

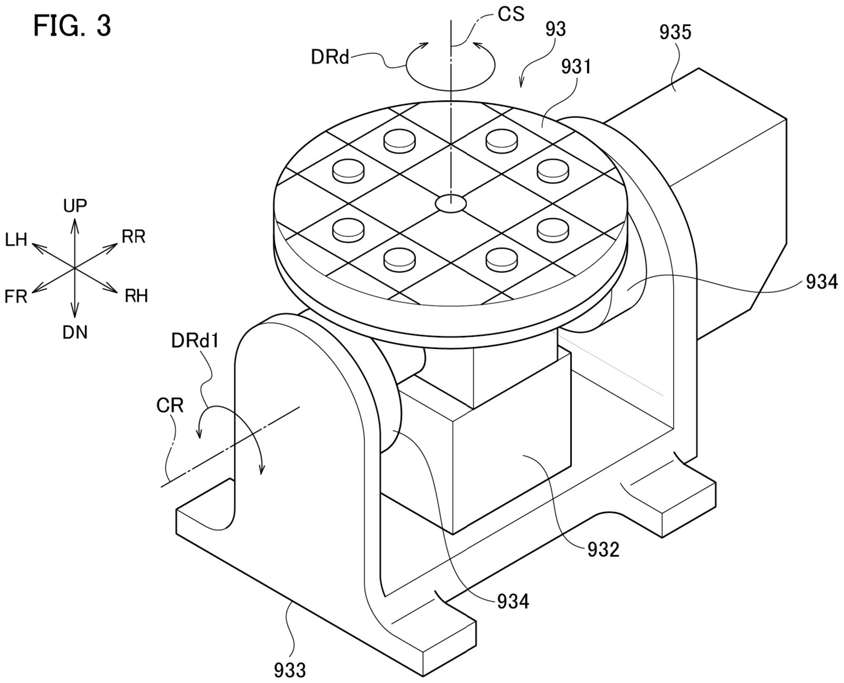

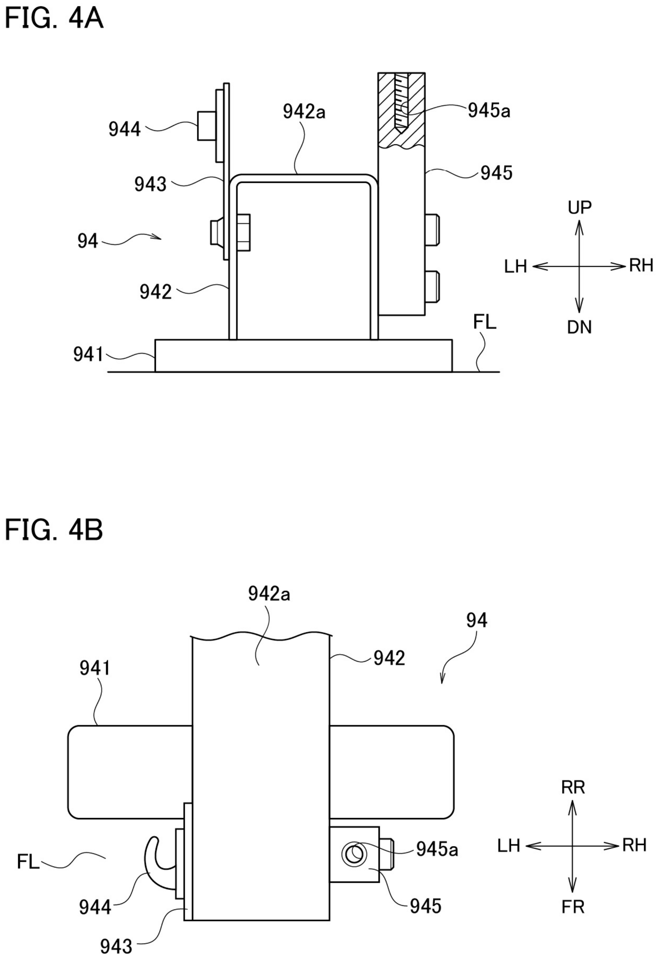

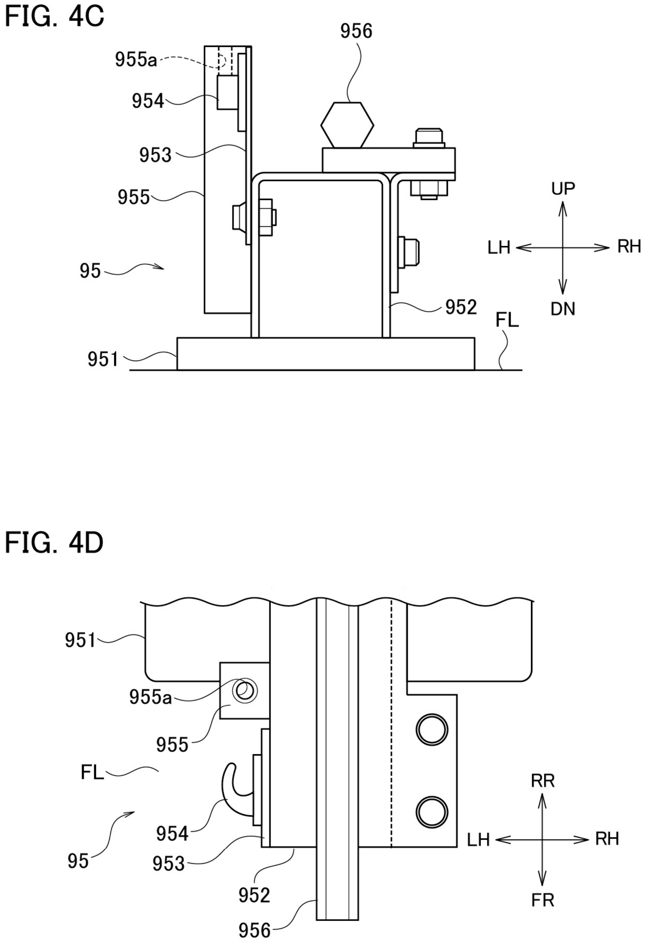

A laser processing machine 91 included in a laser processing system according to an embodiment will be described with reference to FIG. 1 through FIG. 4D. FIG. 1 is a perspective view of a laser processing machine 91 of a laser processing system according to the embodiment. FIG. 2A is a perspective view showing a state where partitions 911 of the laser processing machine 91 are removed, and FIG. 2B is a front view showing a catcher 81 included in the laser processing machine 91. FIG. 3 is a perspective view showing a pivot table unit 93 included in the laser processing machine 91. FIG. 4A is a front view showing a flat rail unit 94 included in the laser processing machine 91, and FIG. 4B is a plan view showing a front portion of the flat rail unit 94. FIG. 4C is a front view showing a rod rail unit 95 included in the laser processing machine 91. FIG. 4D is a plan view showing a front portion of the rod rail unit 95. For convenience of description, upward, downward, forward, backward, leftward and rightward directions are defined by directions indicated by arrows in FIG. 1, respectively.

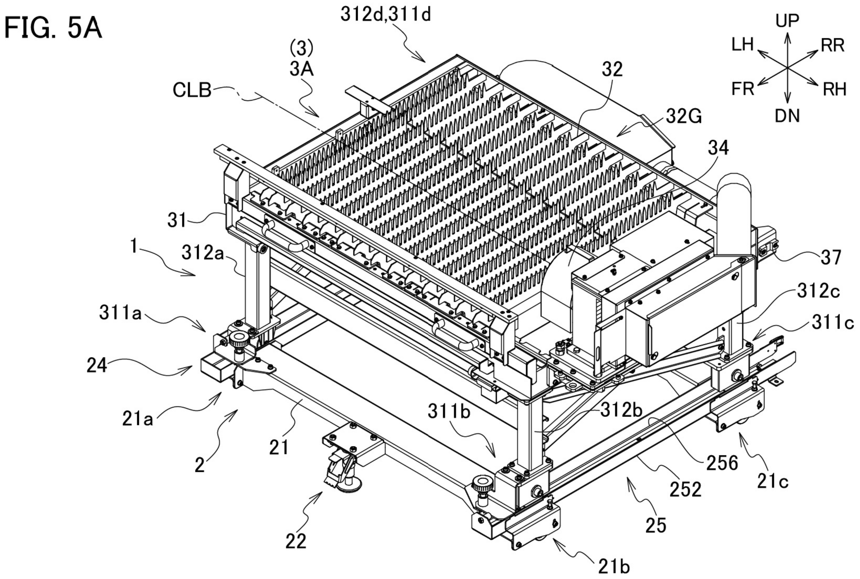

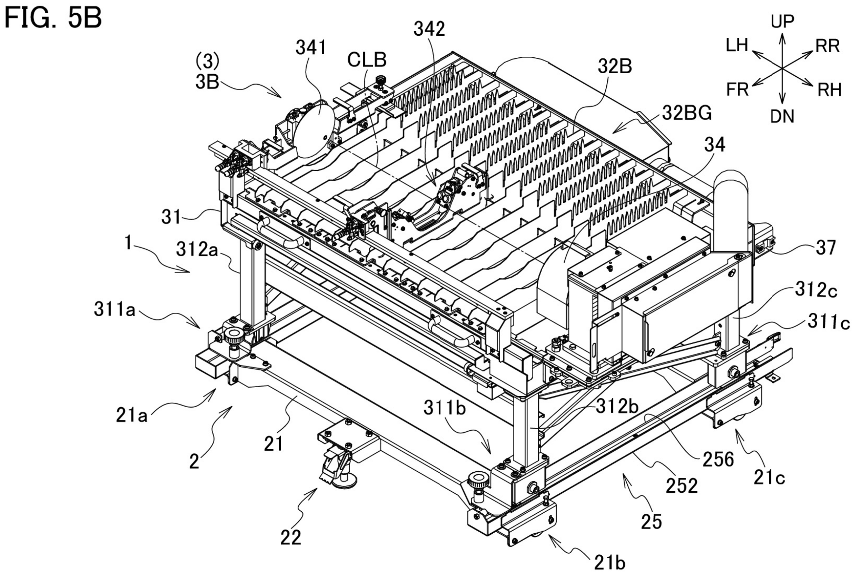

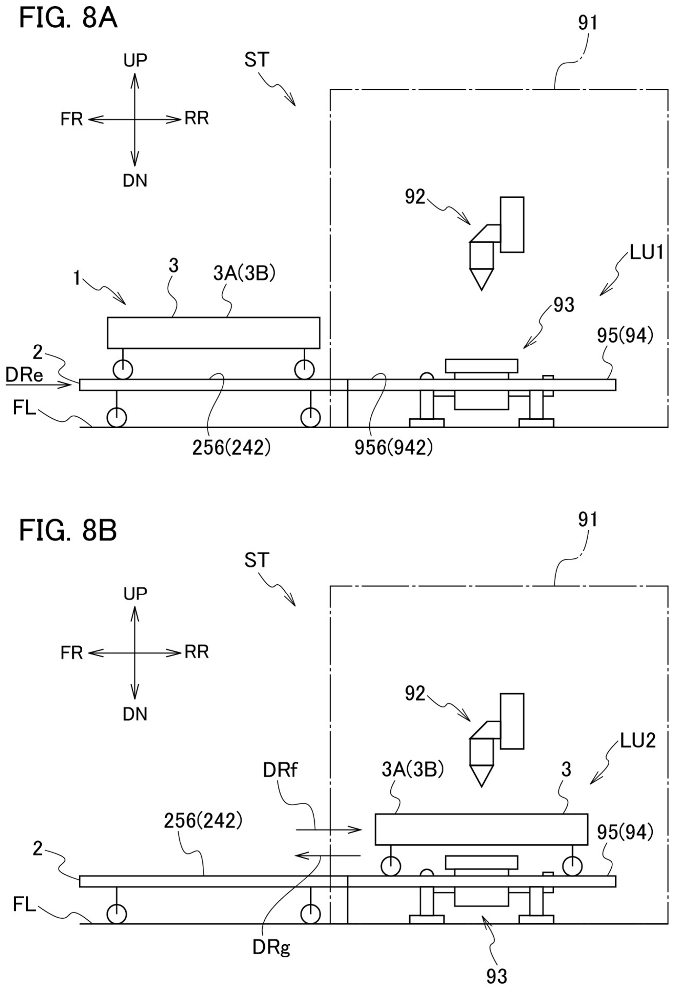

In following description, two-dimensional processing of a flat-plate workpiece, such as a sheet metal, supported on a plate-adapted table 3A (see FIG. 5A) and a rod-shaped workpiece held on a rod-adapted table 3B (see Figure 5B) is referred to as 2D machining. In addition, three-dimensional processing of a three-dimensional workpiece held by a pivot table unit 93 (see FIG. 3) is referred to as 3D processing. The pivot table unit 93 is a table device that has a pivot table 931 rotatable about two axes perpendicular to each other to hold a three-dimensional workpiece with its posture changeable by the pivot table 931. The laser processing system ST (see FIG. 8A) is configured to include the laser processing machine 91 and a work table 3 (see FIG. 5A). The work table 3 and a dolly 2 constitute a table carriage unit 1 (see FIG. 5A).

First, the laser processing machine 91 will be described. As shown in FIG. 1, the laser processing machine 91 includes partitions 911 as an outer shell. The partitions 911 form a shell-like hexahedron with a space inside. A front face of the outer shell is provided with a double-leaf door having a side-leaf door 912 and a right-leaf door 913 that open outwardly, and a right-side face of the outer shell is provided with a side door 914.

A laser processing head 92, the pivot table unit 93, a flat rail unit 94, a rod rail unit 95 and a control unit 99 are provided inside the partitions 911. A camera device 97 is installed at the center of a top panel of the partitions 911. The camera device 97 captures a plan view image of the inside of the partitions 911 and outputs it to the control unit 99. As described later, the work table 3 can be installed inside the partitions 911, and the work table 3 can be also removed from the inside of the partitions 911.

The inside of the partitions 911 is described with reference to FIG. 2A. A cubic frame 96 framed to have a cuboid shape is disposed inside the partitions 911. An upper left frame member 96b and an upper right frame member 96c, which are distanced from each other in parallel on left and right sides, are arranged at a top of the cubic frame 96 to extend back and forth. A gantry 96d extending left and right is supported by the upper left frame member 96b and the upper right frame member 96c to be movable in a front-back direction (arrow DRa). The gantry 96d supports a carriage 92c to be movable in a left-right direction (arrow DRb), and the carriage 92c supports the laser processing head 92 to be movable in an up-down direction (arrow DRc). The gantry 96d, the carriage 92c and the laser processing head 92 are moved by drive units (not shown in the drawings) under a control of the control unit 99. The laser processing head 92 can be moved independently in one of three movements, the front-back direction, the left-right direction and the up-down direction, and can be also moved in two or three of the three movements simultaneously. In other words, the laser processing head 92 can move three-dimensionally.

The laser processing head 92 has a head main body 92a and a nozzle 92b attached to an end of the head main body 92a. A laser beam is emitted from a tip end of the nozzle 92b. The laser processing head 92 is rotatable about a rotational axis extending in the front-back direction and a rotational axis extending in the up-down direction in FIG. 2A. The laser beam can be emitted to an arbitrary position on a three-dimensional workpiece held on the pivot table unit 93 by directing an optical axis of the laser beam together with the above-mentioned three-dimensional movement of the laser processing head 92. As a result, 3D processing by the laser beam emitted from the laser processing head 92 can be done.

The pivot table unit 93 is disposed at almost the center position of a floor FL on which the partitions 911 are installed. The flat rail unit 94 and the rod rail unit 95, as a pair of rail units that are distanced from each other in parallel to extend back and forth, are laid on both left and right sides of the pivot table unit 93 on the floor FL. An installation height of the flat rail unit 94 and the rod rail unit 95, which are the pair of rail units, is not limited.

A front lower frame member 96a1 extending in the left-right direction is disposed at a front lower portion of the cubic frame 96, and a lower step frame member 96a is disposed adjacently on a front side of the front lower frame member 96a1 to form a lower step. A catcher 81 is attached to a portion of the lower step frame member 96a that corresponds to the rod rail unit 95.

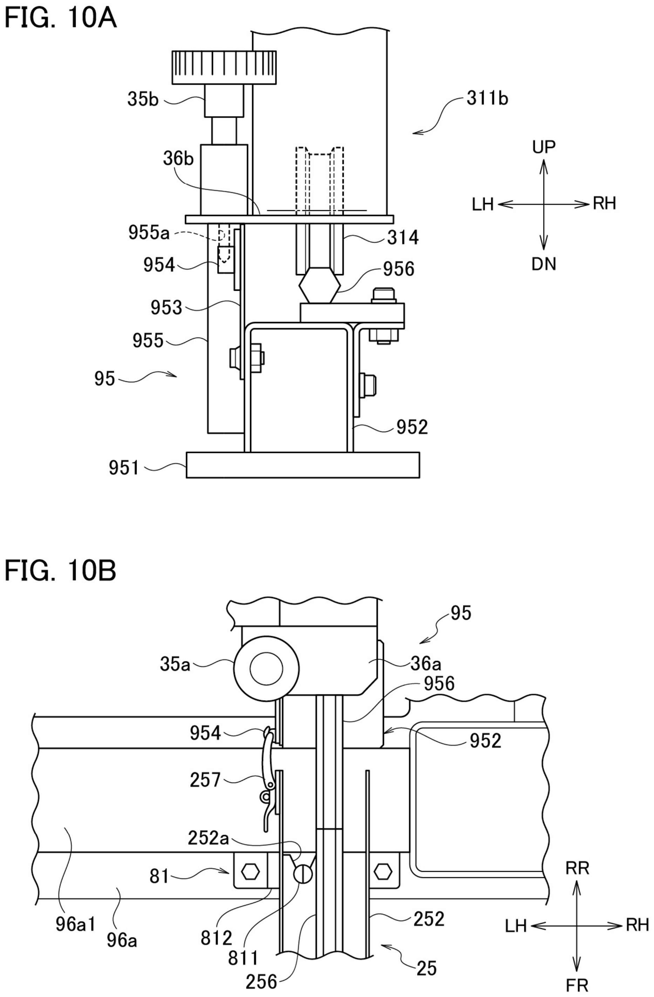

As shown in FIG. 2B, the catcher 81 has a plate 812 having a bulged portion at its middle and a catcher pin 811 raised from the plate 812. A head of the catcher pin 811 is located at a height corresponding to a rod rail 956 (see FIG. 10A: to be described in detail later) of the rod rail unit 95. The catcher pin 811 is located near a left side of the rod rail 956 in the front view.

In FIG. 2A, a right center pillar 96e extending up and down is disposed at almost the center of a right side of the cubic frame 96. A table locking device 98 and a switch 982 are mounted at almost the center, in the up-down direction, on an inner face of the right center pillar 96e.

As shown in FIG. 3, the pivot table unit 93 has the pivot table 931, a CS motor 932 as a drive unit, a base 933, shafts 934 and a CR motor 935 as a drive unit. The CS motor 932 is the drive unit that changes the posture of the pivot table 931 at least in its horizontal posture. The posture change of the pivot table 931 in the horizontal posture is a rotating motion about a vertical axis CS. The rotating motion of the pivot table 931 about the vertical axis CS can rotate a three-dimensional workpiece placed on the pivot table 931 in the horizontal posture to change the posture of the three-dimensional workpiece. On the other hand, the CR motor 935 is the drive unit that tilts the pivot table 931.

The pivot table 931 is formed to have a disk shape, and a three-dimensional workpiece modeled three-dimensionally by molding or the like is fixed on the pivot table 931 by fasteners (not shown in the drawings). The pivot table 931 is connected to a drive shaft of the CS motor 932 and rotates about the axis CS (arrow DRd). In addition, the pivot table 931 and the CS motor 932 are supported by the base 933 swingably about the axis CR (arrow DRd1) via a pair of shafts 934. The pivot table 931 in the present embodiment is a two-axis rotary table that can rotate about the axis CS and tilt about the axis CR. However, the pivot table 931 may be a single-axis rotary table that can only rotate about the vertical axis CS. Alternatively, the pivot table 931 may be a fixed table that does not rotate or tilt. Note that the pivot table 931 may be a three-axis table that can further be rotated about an axis that is perpendicular to the axis CS and the axis CR and extends left and right in FIG. 3.

The shafts 934 are connected to a drive shaft of the CR motor 935. Therefore, the pivot table 931 can rotate about the axis CS and tilt about the axis CR. Operations of the CS motor 932 and the CR motor 935 are controlled by the control unit 99. The three-dimensional workpiece fixed on the pivot table unit 93 is controlled by the control unit 99 to take a desired posture to be 3D processed by the laser beam emitted from the laser processing head 92.

As shown in FIG. 4A and FIG. 4B, the flat rail unit 94 has a rail member 942 extending back and forth. The rail member 942 has an angular U-shaped cross section and is supported from below by a top face of a flat rail base 941 disposed on the floor FL to take a posture in which its opening is oriented downward. A flat rail 942a is formed on an upper face of the rail member 942. A bracket 943 is attached to a left side face of a front end of the rail member 942 to extend upward, and a fastener pole 945 is attached to its right side face to extend upward. A female screw hole 945a extending downward is formed on an upper face of the fastener pole 945. A hook 944 of a so-called toggle latch is attached to an upper portion on a left face of the bracket 943.

As shown in FIG. 4C and FIG. 4D, the rod rail unit 95 has a rail member 952 extending back and forth, and a rod rail 956 disposed on the rail member 952. The rail member 952 has an angular U-shaped cross section and is supported from below by a top face of the rod rail base 951 disposed on the floor FL to take a posture in which its opening is oriented downward. The rod rail 956 has a regular hexagonal cross section and is directly or indirectly attached to the upper face of the rail member 952 to take a posture in which its pair of opposite faces is made horizontal. A fastener pole 955 is attached to a left side face of a front end of the rail member 952 to extend upward. A female screw hole 955a extending downward is formed on an upper face of the fastener pole 955. A bracket 953 is attached to a left side face of the front end of the rail member 952 to extend upward. A hook 954 of a toggle latch is attached to an upper portion on a left face of the bracket 953.

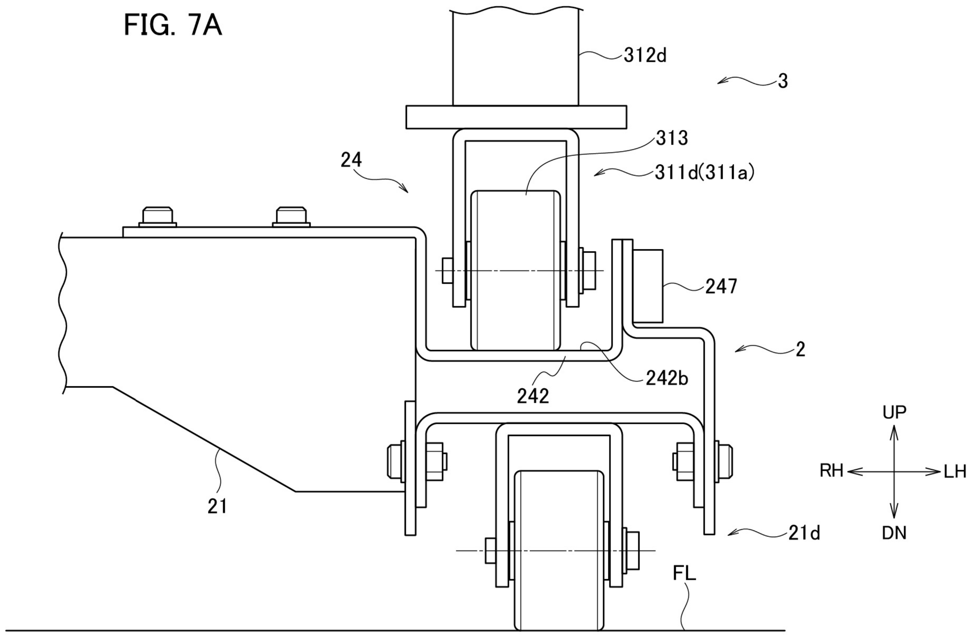

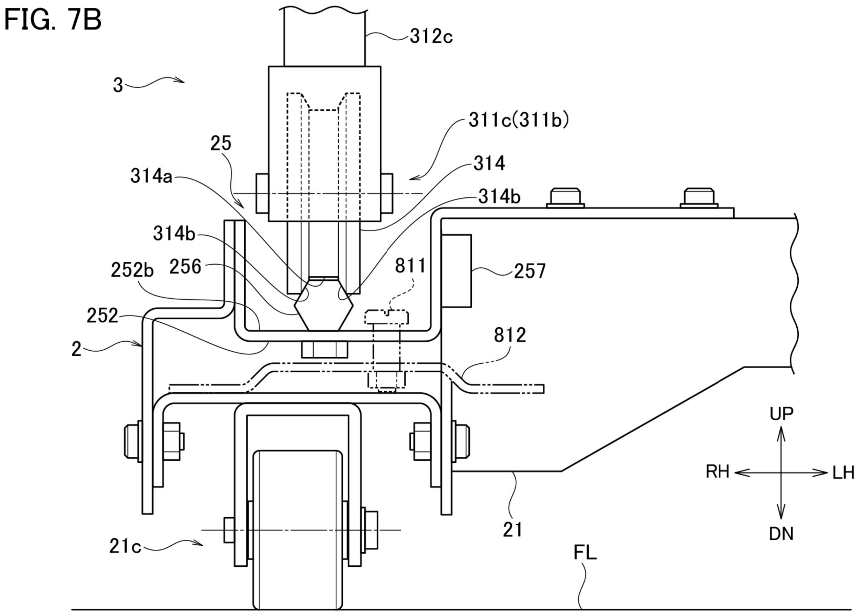

The flat rail 942a of the flat rail unit 94 functions as a rail on which after-described left-side casters 311a and 311d (see FIG. 7A) of a table base 31 are placed when the work table 3 is moved into the laser processing machine 91. The rod rail 956 of the rod rail unit 95 functions as a rail on which after- described right-side casters 311b and 311c (see FIG. 7B) of the table base 31 are placed when the work table 3 moved into the laser processing machine 91.

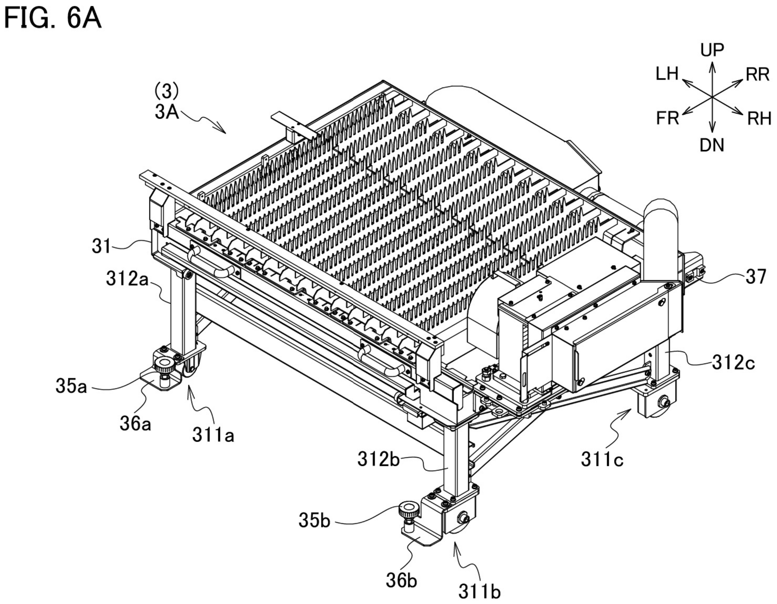

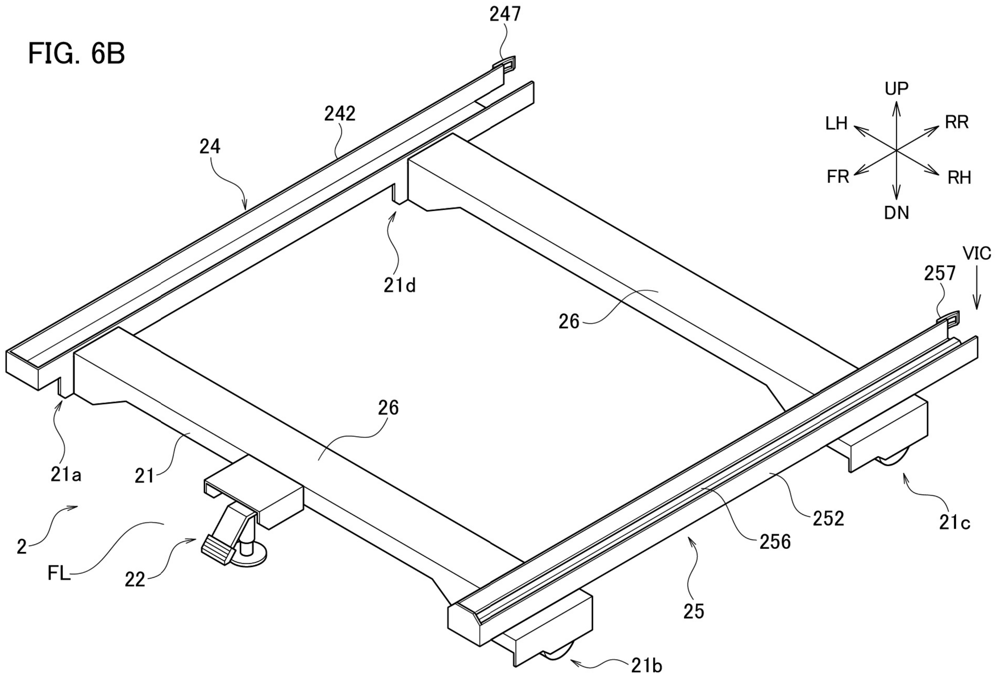

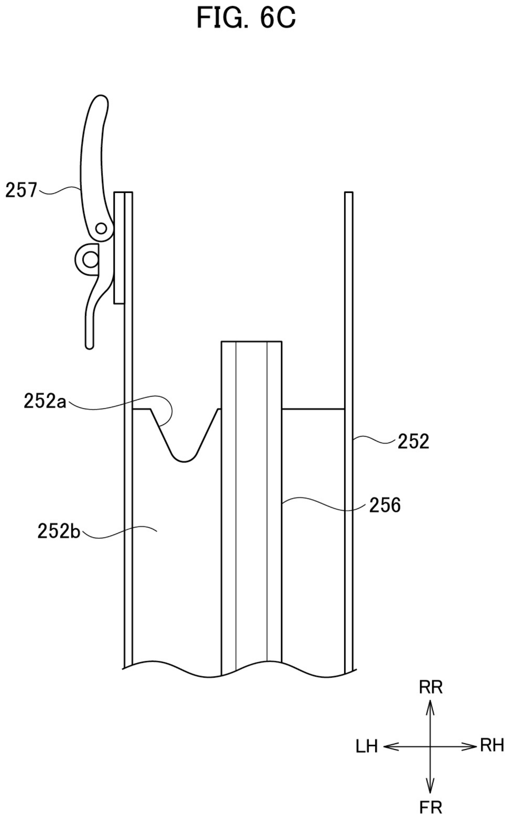

Next, the table carriage unit 1 used for installing the work table 3 to the inside of the partitions 911 will be described with reference to FIG. 5A through FIG. 7B. FIG. 5A is a perspective view showing the table carriage unit 1 including the plate-adapted table 3A, as the work table 3, to be installed in the laser processing machine 91. FIG. 5B is a perspective view showing the table carriage unit 1 including the rod-adapted table 3B, as the work table 3, to be installed in the laser processing machine 91. FIG. 6A is a perspective view showing the work table 3 separated from the dolly 2, and FIG. 6B is a perspective view showing the dolly 2 separated from the work table 3. FIG. 6C is a plan view of a portion indicated by an arrow VIC in FIG. 6B. FIG. 7A is a rear view showing a caster 21d of the table carriage unit 1 and its vicinity, and FIG. 7B is a rear view showing a caster 21c of the table carriage unit 1 and its vicinity.

As shown in FIG. 5A and FIG. 5B, the table carriage unit 1 has the dolly 2 and the work table 3 placed on the dolly 2. The work table 3 can be selected from the plate-adapted table 3A shown in FIG. 5A for placing a flat-plate workpiece thereon and the rod-adapted table 3B shown in FIG. 5B for placing a rod-shaped workpiece thereon. First, the table carriage unit 1 including the plate-adapted table 3A and the dolly 2 will be described.

As shown in FIG. 6B, the dolly 2 included in the table carriage unit 1 has a rectangular frame body 21. The frame body 21 has a first sled rail 24 extending in the front-back direction, a second sled rail 25 distanced from the first sled rail 24 in parallel and on a right side thereof, and a pair of connecting frames 26 extending in the left-right direction to be distanced from each other back and forth. Front ends of the first sled rail 24 and the second sled rail 25 are connected by one of the connecting frames 26. Rear ends of the first sled rail 24 and the second sled rail 25 are connected by another of the connecting frames 26. Casters 21a through 21d are attached to four corners of a bottom of the frame body 21, respectively. Therefore, the dolly 2 can be moved on the floor FL by human power.

As shown in FIG. 6B and FIG. 7A, the first sled rail 24 on the left side has a rail member 242 extending back and forth. The rail member 242 has an angular U-shaped cross section and is disposed to take a posture in which its opening is oriented upward. As shown in FIG. 6B, a buckle 247 of the toggle latch as a joint device is attached to a rear end on a left side face of the rail member 242.

As shown in FIG. 6B and FIG. 7B, the second sled rail 25 on the right side has a rail member 252 extending back and forth and a rod rail 256 extending back and forth. The rail member 252 has an angular U-shaped cross section and is disposed to take a posture in which its opening is oriented upward. The rod rail 256 is fixed on an upper face 252b of a bottom plate of the rail member 252 and has the same crosssectional shape as that of the rod rail 956 of the laser processing machine 91. In other words, the rod rail 256 has a regular hexagonal cross section and is attached onto the upper face 252b to take a posture in which its pair of opposing faces are made horizontal. As shown in FIG. 6B and FIG. 6C, a buckle 257 of a toggle latch as a joint device is attached to a left face of a rear end of the rail member 252. Left and right side plates of the rail member 252 extend rearwardly from the bottom plate, and a V-shaped guide notch 252a is formed at an end edge of the bottom plate. A pedal stopper 22 is attached to a front face of the connecting frame 26 at a front portion of the dolly 2 (see Fig. 6B).

As shown in FIG. 5A, the plate-adapted table 3A includes a table base 31, a workpiece support unit 32G configured to include plural supporting slats 32, a rotation drive unit 34, and a lock engagement portion 37. The table base 31 is a box that is thin vertically and its top is made open. Each of the supporting slats 32 is a thin plate member extending back and forth and an entire range of its upper edge is formed to have a saw-teeth shape. The supporting slats 32 are aligned in parallel to be separated from each other in the left-right direction and constitute the workpiece support unit 32G. A flat-plate workpiece is to be placed on the workpiece support unit 32G. An external dust collector suctions air in an inside space of the table base 31 through a duct (not shown in the drawings). Unwanted materials such as fumes generated by laser processing are forcibly discharged through the duct.

The rotation drive unit 34 has a chuck (not shown in the drawings) that holds one end (right end) of a rod-shaped workpiece whose axis CLB extends in the left-right direction, and a motor (not shown the drawings) that rotates the chuck about the axis CLB. The operation of the rotation drive unit 34 is controlled by the control unit 99. The rotation drive unit 34 is not used in the plate-adapted table 3A, but is used in the rod-adapted table 3B to be described later. Although described later, the plate-adapted table 3A (see FIG. 5A) can be changed to the rod-adapted table 3B (see FIG. 5B) by replacing the support slats 32 and so on.

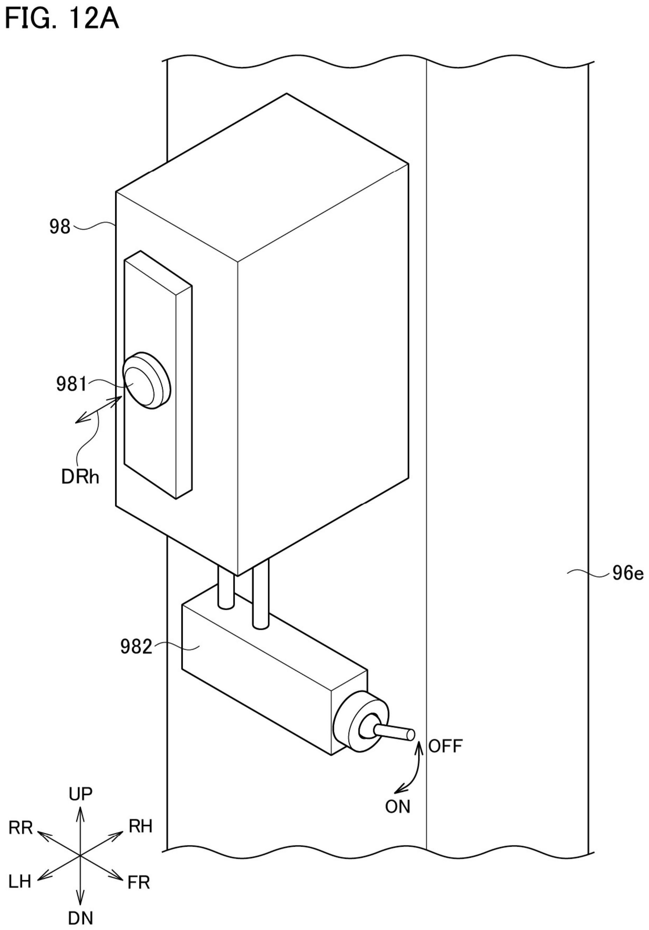

The lock engagement portion 37 is attached to a left side face of a portion of the table base 31, which protrudes rearward from its right rear corner. The lock engagement portion 37 is to be engaged with a protruding lock portion 981 of the table locking device 98 (see FIG. 2A and FIG. 12A) to restrict a back-and-forth movement of the work table 3. The protruding lock portion 981 functions as a plunger to be protruded from the table locking device 98.

In FIG. 5A, four posts 312a to 312d are attached to four corners of a bottom face of the table base 31, respectively. Casters 311a to 311d are attached to the lower ends of the posts 312a to 312d respectively, and the table base 31 can be moved in the front-back direction by human power.

The casters 311a and 311d on the left side are to be placed on the first sled rail 24 (see FIG. 6B) of the dolly 2, and the casters 311b and 311c on the right side are to be placed on the second sled rail 25 (see FIG. 6B) of the dolly 2. Therefore, the work table 3 can move on the dolly 2 in the front-back direction. As shown in FIG. 7A, each disk-shaped wheel 313 of the casters 311a and 311d on the left side rolls on the top face 242b of the rail member 242 of the first sled rail 24. As shown in FIG. 7B, each grooved wheel 314 of the casters 311b and 311c of the right side rotates on the rod rail 256 of the second sled rail 25.

The wheel(s) 314 has a disk-shaped body 314a and radially expanded portions 314b formed at its both ends. Each of the radially expanded portions 314b expands its outer diameter as it is distanced from the body 314a along the axis. Thus, the wheel 314 has a bobbin shape. In other words, the wheel 314 has a cable reel/drum shape formed of the body 314a and radially expanded portions 314b as flanges each of which gradually expands radially from its both ends. The radially expanded portions 314b contact inclined surfaces of the rod rail 256. A position of the work table 3 in the up-down direction is determined by the contact of the rail member 242 with the wheels 313 and the contacts of the rod rail 256 with the wheels 314. A position of the work table 3 in the left-right direction is also determined with a certain degree of accuracy by the contacts between the rod rail 256 and the wheels 314.

The plate-adapted table 3A can be changed to the rod-adapted table 3B by changing some components. Specifically, as shown in FIG. 5B, a workpiece support unit 32BG of the rod-adapted table 3B is formed by replacing the supporting slats 32 of the plate-adapted table 3A with supporting slats 32B only each rear upper edge of which is formed to have a saw-teeth shape. Furthermore, an intermediate supporter 342 movable in the left-right direction is mounted along the axis CLB, and a tailstock 341 movable in the left-right direction is mounted on a left side from the intermediate supporter 342. A first end of the rod-shaped workpiece is supported by the tailstock 341, and its opposite second end is supported by the rotation drive unit 34. The rod-shaped workpiece is 2D processed by a laser beam emitted from the laser processing head 92 while being rotated about the axis CLB between the chuck of the rotation drive unit 34 and the tailstock 341.

The rod-adapted table 3B can be changed to the plate-adapted table 3A by reverse procedures of the above procedures. In the above configuration, the dolly 2 and the table base 31 can be shared by the plate-adapted table 3A and the rod-adapted table 3B. Of course, the plate-adapted table 3A and the rod-adapted table 3B may be provided independently from each other.

The work table 3, i.e., the plate-adapted table 3A or the rod-adapted table 3B, place on the dolly 2 can be fed into the inside of the laser processing machine 91 through butting the rails of the dolly 2 of the table carriage unit 1, in which the work table 3 has been placed on the dolly 2, onto the rails of the laser processing machine 91. In addition, the work table 3 inside the laser processing machine 91 can be retrieved onto the dolly 2 similarly. These processes are explained with reference to FIG. 8A and FIG. 8B.

FIG. 8A is a schematic right side view showing a state where the table carriage unit 1 is connected to the laser processing machine 91, and FIG. 8B is a schematic right-side view showing a state where the work table 3 has been moved into the laser processing machine 91 from the state shown in FIG. 8A.

As shown in FIG. 8A, the pair of the rail units 94 and 95 are laid inside the laser processing machine 91. The pair of the rail units 94 and 95 are the flat rail unit 94 and the rod rail unit 95. The pivot table unit 93 is installed between the rod rail unit 95 and the flat rail unit 94. In a state where the laser processing machine 91 is stopped, the laser processing head 92 is standing by above the pivot table unit 93.

The left-leaf door 912 and the right-leaf door 913 of the double-leaf door shown in FIG. 1 are opened, and the table carriage unit 1 is connected to the laser processing machine 91. In detail, the dolly 2 with the work table 3 had been placed thereon is connected to the laser processing machine 91 by a predetermined operation to be described later (see arrow DRe in FIG. 8A). The rail member 242 of the dolly 2 butts up against the rail member 942 of the laser processing machine 91, and they become substantially continuous. Similarly, the rod rail 256 of the dolly 2 is butted against the rod rail 956 of the laser processing machine 91, and they become substantially continuous. As shown in FIG. 8B, the work table 3 is then moved from the dolly 2 into the laser processing machine 91 by human power (see arrow DRf in FIG. 8B) and locked at a defined position inside the laser processing machine 91 in a predetermined operation to be described later.

Even after the work table 3 has been moved into the laser processing machine 91, the pivot table unit 93 is located below the table base 31 and does not come in touch with the work table 3. In a case where the work table 3 is the plate-adapted table 3A, a flat-plate workpiece supported by the plate-adapted table 3A can be 2D processed by a laser beam emitted from the laser processing head 92 without relocating the pivot table unit 93. In a case where the work table 3 is the rod-adapted table 3B, a rod-shaped workpiece supported by the rod-adapted table 3B can also be 2D processed by a laser beam emitted from the laser processing head 92 without relocating the pivot table unit 93.

In a state where the work table 3 is installed inside the laser processing machine 91, the pivot table unit 93 is not used. Therefore, as a change of an interlock area, an operating area of the laser processing head 92 is changed to an operating area for 2D processing, which is more limited than an operating area for 3D processing using the pivot table unit 93. The interlock area is an area that regulates a laser beam emission. The work table 3 in the laser processing machine 91 can be placed on the dolly 2 after being unlocked and then removed from the laser processing machine 91 by human power (see arrow DRg in FIG. 8B).

The toggle latches serving as the joint devices are used to connect the rails of the dolly 2 to the rails of the laser processing machine 91. In addition, the table locking device 98 is used for positioning the work table 3 moved inside the laser processing machine 91 in the front-back direction. The work table 3 is secured by tightening fastener knobs 35a and 35b to the fastener poles 945 and 955, respectively. These are explained with reference to FIG. 6A and FIG. 9A through FIG. 12B.

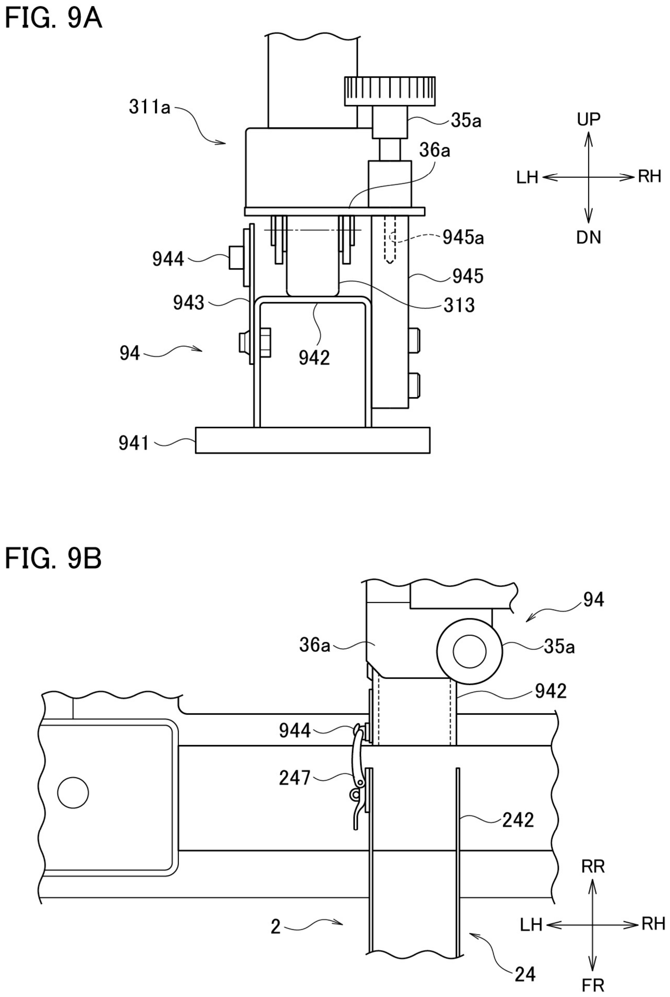

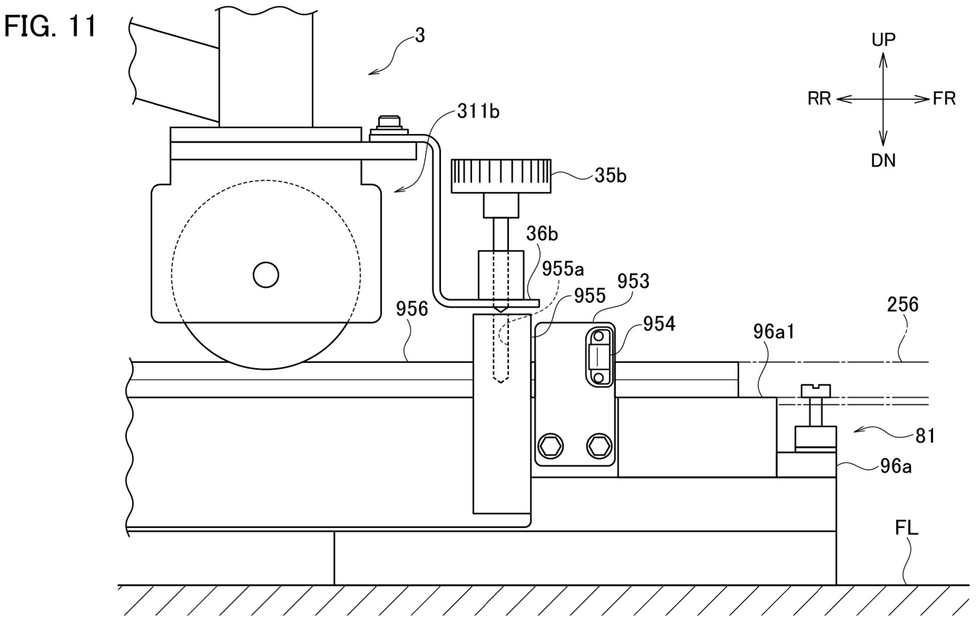

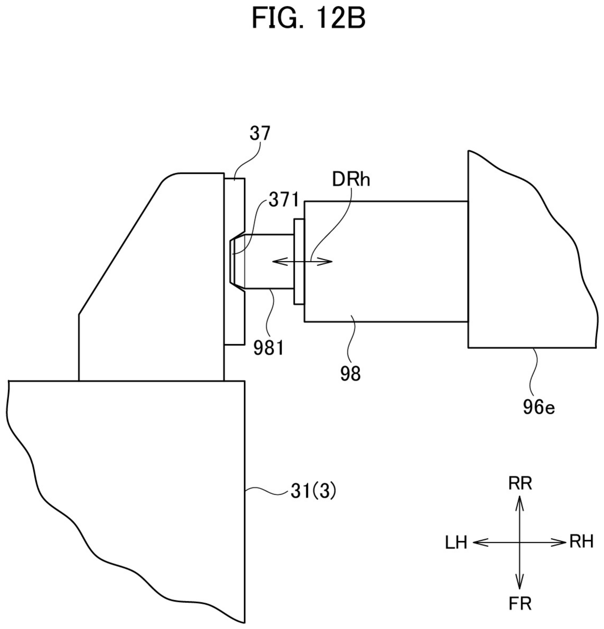

FIG. 9A is a front view showing a front left portion of the work table 3 that has been moved into the laser processing machine 91, and FIG. 9B is a plan view showing a left-side joint portion of the dolly 2 connected to the laser processing machine 91. FIG. 10A is a front view showing a front right portion of the work table 3 that has been moved into the laser processing machine 91, and FIG. 10B is a plan view showing a right-side joint portion of the dolly 2 connected to the laser processing machine 91. FIG. 11 is a left side view showing the right-side joint portion of the dolly 2 connected to the laser processing machine 91. FIG. 12A is a perspective view showing a table locking device 98 included in the laser processing machine 91, and FIG. 12B is a plan view showing a state where a table base 31 of the work table 3 is locked by the table locking device 98.

FIG. 6A is a perspective view showing the work table 3. Only the work table 3 is shown in FIG. 6A and the dolly 2 is not shown therein. The work table 3 has a bracket 36a at its left front caster 311a and the fastener knob 35a supported by the bracket 36a capable of shifting vertically (see FIG. 9A). The work table 3 also has a bracket 36b and the fastener knob 35b supported by the bracket 36b capable of shifting vertically at its right front caster 311b (see FIG. 10A). A male screw is formed at an end of each shaft of the fastener knobs 35a and 35b.

When connecting the dolly 2 to the laser processing machine 91, at first, as shown in FIG. 9B and FIG. 10B, the dolly 2 is moved so that the front end of the rail member 942 of the flat rail unit 94 corresponds to the rear end of the rail member 242 of the first sled rail 24 and the front end of the rod rail 956 of the rod rail unit 95 corresponds to the rear end of the rail member 252 of the second sled rail 25. At this time, as shown in FIG. 10B, the guide notch 252a formed at the rear end of the rail member 252 engages the catcher pin 811 of the catcher 81 of the laser processing machine 91 to guide the dolly 2 to a predetermined position in the left-right direction. When an operator moves the dolly 2 closer to the laser processing machine 91 so that the rails butt up against each other, the dolly 2 is naturally positioned in the left-right direction.

Subsequently, the operator then latches the buckles 247 and 257 to the hooks 944 and 954, respectively. FIG. 9B and FIG. 10B show a state where the buckles 247 and 257 have been already latched. The rail members 242 and 252 are strongly pulled to the rail members 942 and 952, respectively. As a result, the dolly 2 is connected to the laser processing machine 91 and the connection state is kept.

Next, the table locking device 98 is operated after the work table 3 is moved from the dolly 2 into the laser processing machine 91. As shown in FIG. 2A, FIG. 12A and FIG. 12B, the table locking device 98 is attached to the right center pillar 96e. The switch 982 is provided below the table locking device 98. The protruding lock portion 981 protrudes leftward from the table locking device 98 when the operator sets the switch 982 to ON, and it is retracted when he/she sets it to OFF (see arrow DRh in FIG. 12A and FIG. 12B).

When the work table 3 is moved into the laser processing machine 91 in the state where the dolly 2 is connected to the laser processing machine 91, the lock engagement portion 37 (see FIG. 6A) provided at the rear right of the table base 31 is located in front of the table locking device 98, as shown in FIG. 12B. The lock engagement portion 37 has a trapezoidal-shaped recess 371 in a plan view. When the switch 982 is turned ON, the protruding lock portion 981 protrudes and engages the lock engagement portion 37 to set the position of the work table 3 in the front-back direction. When the work table 3 positions at a position where it can be locked by the table locking device 98, connection between a connector and a plug (not shown in the drawings) is made, and thus signal communication and power supply are established between the rotation drive unit 34 of the work table 3 and the control unit 99 of the laser processing machine 91.

When the work table 3 is secured in the front-back direction by the table locking device 98, the fastener knob 35a is positioned at a position where it can be screwed into the female screw hole 945a of the fastener pole 945, as shown in FIG. 9A. Similarly, as shown in FIG. 10A, the fastener knob 35b is positioned at a position where it can be screwed into the female screw hole 955a of the fastener pole 955. The operator tightens the fastener knobs 35a and 35b into the female screw holes 945a and 955a, respectively. As a result, the work table 3 is firmly secured at the position determined by the table locking device 98.

As shown in FIG. 11, a gap is formed between the bracket 36b supporting the fastener knob 35b and the fastener pole 955 before fastening the fastener knob 35b. This gap is eliminated after the fastener knob 35b is fastened and the bracket 36b contacts the fastener pole 955. As a result, caster 311b, which supports the bracket 36b, is pressed onto the rod rail 956, and the work table 3 is more securely fixed. This configuration is constructed similarly for the fastener pole 945 and the bracket 36a on the left side.

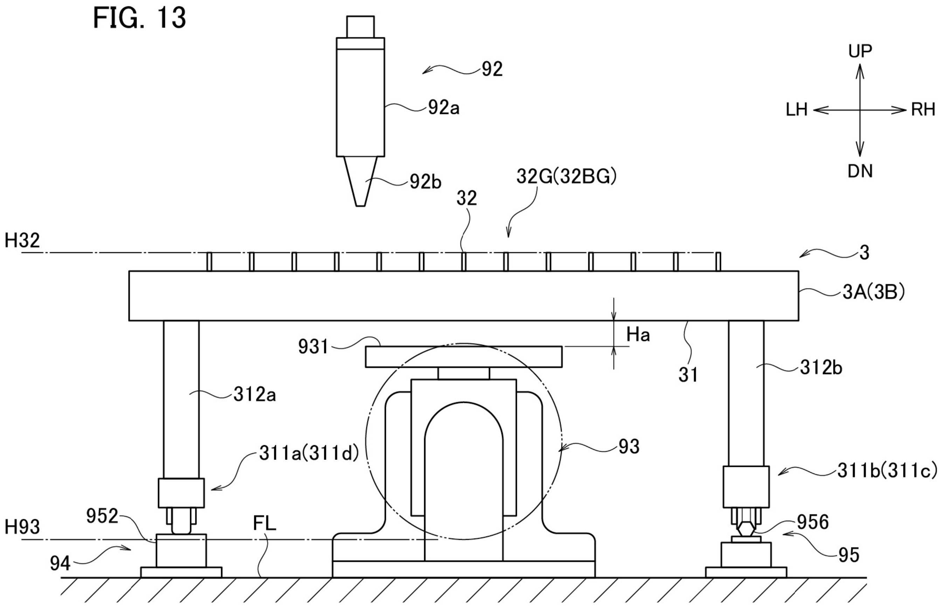

As shown in FIG. 13, the table base 31 covers the pivot table unit 93 when the work table 3 has been installed at the defined position inside the laser processing machine 91 after being moved on the flat rail unit 94 and the rod rail unit 95. A clearance of a height Ha is created in the u-down direction between a bottom face of the table base 31 and a top face of the pivot table unit 93 in its horizontal posture. Therefore, 2D machining can be done by using the work table 3 while the pivot table unit 93 used for 3D machining is still mounted. In a case where the work table 3 is the plate-adapted table 3A, the laser processing head 92 in the standby position is located sufficiently above the work table 3 so as not to contact the workpiece support unit 32G. Even in a case where the work table 3 is the rod-adapted table 3B, the laser processing head 92 in the standby position is located sufficiently above the work table 3 so that it does not contact the workpiece support unit 32BG, the tailstock 341 and the intermediate supporter 342 (see FIG. 5B).

The ON/OFF signals are output from the switch 982 (see FIG. 12A) to the control unit 99. When the control unit 99 receives the ON signal from the switch 982, the control unit 99 determines that the work table 3, i.e., the plate-adapted table 3A or the rod-adapted table 3B, is installed inside the laser processing machine 91, and then changes the interlock area from the 3D processing area for the pivot table unit 93 to the 2D processing area for the work table 3.

The changeover of the interlock area may be done as follows. When the control unit 99 receives the ON signal from the switch 982, the control unit 99 analyzes the presence or absence of the work table 3 based on an image captured by the camera device 97 (see FIG. 1). If the control unit 99 determines that the work table 3 is present based on the result of its image analysis, it changes the interlock area.

When the work table 3 is moved from the inside of the laser processing machine 91 onto the dolly 2, the control unit 99 starts monitoring the images captured by the camera device 97 upon receiving the OFF signal from the switch 982, and determines whether the work table 3 has been moved from the inside of the laser processing machine 91. If it is determined that the work table 3 has been moved from the inside of the laser processing machine 91, the control unit 99 changes the interlock area. In other words, the camera device 97 functions as a detector that detects the presence or absence of the work table 3. The detector is not limited to a camera device that captures an image, but may be a noncontact sensor such as a proximity sensor or a contact sensor such as a contact switch.

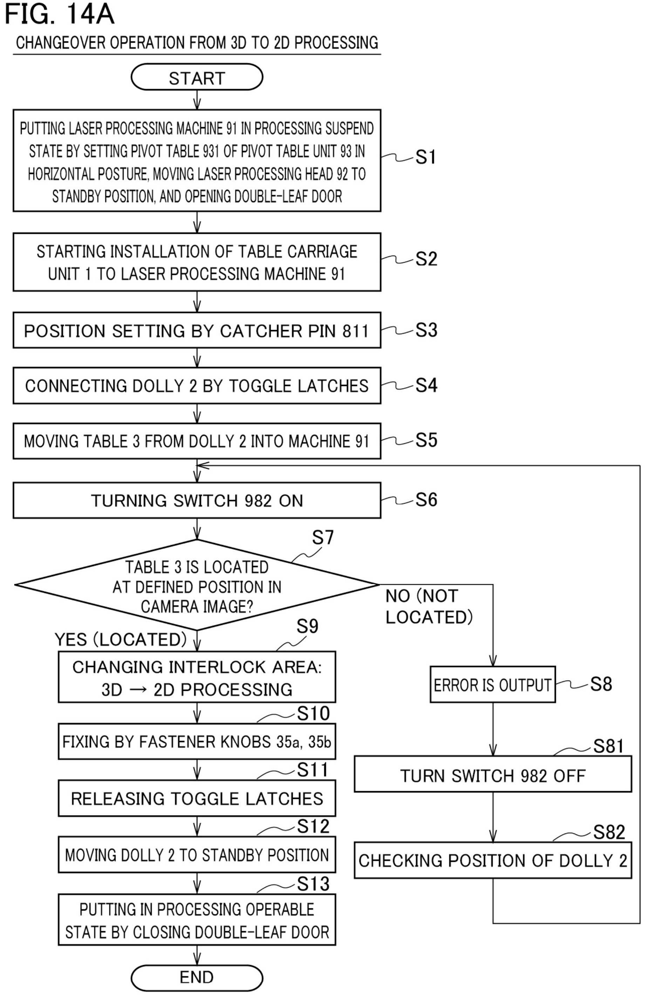

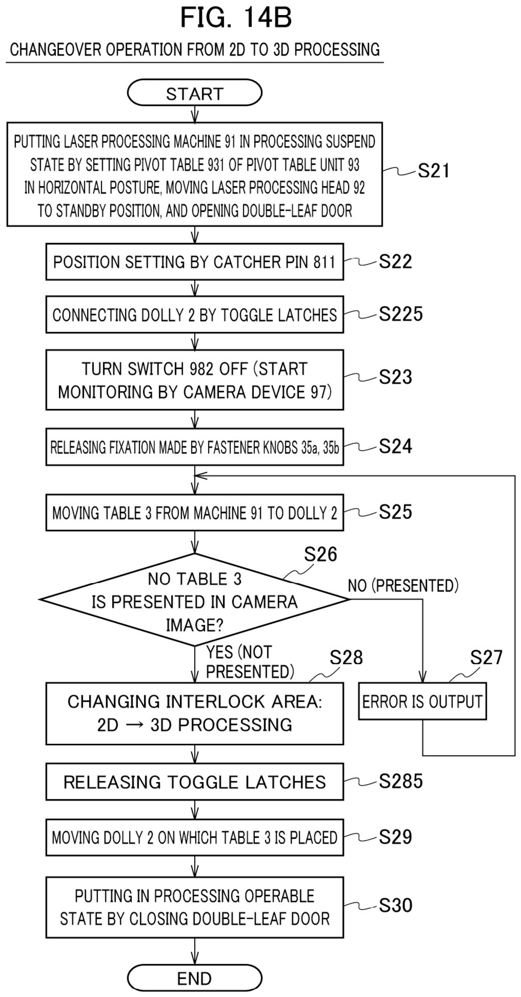

The operation for installing the work table 3 into the laser processing machine 91 having the above configuration and the operation for removing the work table 3 from the inside of the laser processing machine 91 are described with reference to FIG. 14A and FIG. 14B, respectively.

FIG. 14A is a flowchart of the changeover from 3D processing using the pivot table unit 93 to 2D processing using the plate-adapted table 3A. FIG. 14B is a flowchart of the changeover from 2D processing to 3D processing. Operations included in the flowcharts in FIG. 14A and FIG. 14B done by an operator can be replaced by operations done by an automated machine. For example, the work table 3 is moved manually by an operator in the following descriptions, but the work table 3 capable of autonomously running may be adopted.

In the changeover operation from 3D processing to 2D processing shown in FIG. 14A, an operator first sets the pivot table 931 of the pivot table unit 93 in the horizontal posture and moves the laser processing head 92 to the standby position. Then, the left-leaf door 912 and the right-leaf door 913 of the double-leaf door in the partitions 911 are opened. Due to the opening of the double-leaf door, the control unit 99 puts the laser processing machine 91 in a processing suspend state (S1).

Installation of the table carriage unit 1 into the laser processing machine 91 is started (S2). First, the table carriage unit 1 is moved to the position where the first sled rail 24 and the second sled rail 25 of the dolly 2 of the table carriage 1 are to be connected to the flat rail unit 94 and the rod rail unit 95 of the laser processing machine 91, respectively. At that time, the catcher pin 811 of the catcher 81 is guided into the guide notch 252a of the rail member 252, and the table carriage unit 1 is aligned with the laser processing machine 91 in the left and right directions (S3). Next, the operator fastens the buckles 247 and 257 to the hooks 944 and 954, respectively (S4). As a result, the dolly 2 of the table carriage unit 1 is pulled and connected to the laser processing machine 91.

The operator moves the work table 3 from the dolly 2 to the inside of the laser processing machine 91 by pushing the work table 3 (S5). The operator turns the switch 982 to ON (S6). The control unit 99 receives the ON signal from the switch 982 and analyzes the captured image output from the camera device 97 to determine whether the work table 3 is located at the defined position (S7). If the control unit 99 determines that the work table 3 is not located at the defined position (S7: No), the control unit 99 outputs error information from its output device (not shown in the drawings) (S8). If the output device is a display, a warning is shown on its screen, and if the output device is a speaker, a warning tone is sounded. Both the on-screen warning display and the warning tone sounding may be output at the same time. After confirming the error information, the operator turns the switch 982 to OFF (S81) to check the position of the dolly 2 (S82), and then turns the switch 982 to ON again (returns to S6). On the other hand, if the control unit 99 determines that the work table 3 is located at the defined position (S7: Yes), the control unit 99 changes the interlock area from the area for 3D processing to the area for 2D processing (S9). The control unit 99 outputs this determination result and the change of the interlock area through the above-mentioned output device (e.g., presenting on the display).

After confirming the change of the interlock area, the operator fastens the fastener knobs 35a and 35b to fix the work table 3 to the laser processing machine 91 (S10). Next, the operator releases the fastening of the buckles 247 and 257 (S11). As a result, the dolly 2 of the table carriage unit 1 is disconnected from the laser processing machine 91. The operator moves the dolly 2 to a predetermined standby position (S12) and closes the left-leaf door 912 and the right-leaf door 913 of the double-leaf door. Due to the closing of the double-leaf door, the control unit 99 put the laser processing machine 91 in a processing operable state (S13).

Next, the changeover from 2D processing to 3D processing, shown in FIG. 14B, is described.

First, the operator checks the horizontal posture of the pivot table 931 of the pivot table unit 93 and moves the laser processing head 92 to the standby position. Then, the left-leaf door 912 and the right-leaf door 913 of the double-leaf door in the partitions 911 are opened. Due to the opening of the double-leaf door, the control unit 99 put the laser processing machine 91 in the processing suspend state (S21).

The operator moves the dolly 2 to the position where the first sled rail 24 and the second sled rail 25 of the dolly 2 are to be connected to the flat rail unit 94 and the rod rail unit 95 of the laser processing machine 91, respectively. At that time, the catcher pin 811 of the catcher 81 is guided into the guide notch 252a of the rail member 252, and the dolly 2 is aligned in the left-right direction with respect to the laser processing machine 91 (S22).

Next, the operator fastens the buckles 247 and 257 of the toggle latch to the hooks 944 and 954, respectively (S225). As a result, the dolly 2 is pulled and connected to the laser processing machine 91. The operator turns the switch 982 to OFF (S23). The control unit 99 receives the OFF signal from the switch 982 and starts monitoring the images output from the camera device 97. The control unit 99 continuously determines by image analysis whether or not the work table 3 is included in the image.

The operator loosens the fastener knobs 35a and 35b to release the fixture of the work table 3 (S24), and then pulls the work table 3 to move it out from the inside of the laser processing machine 91 onto the dolly 2 (S25). If the control unit 99 determines, based on monitoring by the image analysis, that the work table 3 has been moved by step S25 and is not located in the laser processing machine 91 (S26: Yes), the control unit 99 changes the interlock area from the area for 2D processing to the area for 3D processing (S28). The control unit 99 outputs this determination result and the change of the interlock area through the above-mentioned output device (e.g., presenting on the display). On the other hand, if the control unit 99 determines that the work table is located in the laser processing machine 91 (S26: No), the control unit 99 outputs error information through the output device (S27) and then returns the process flow to step S25.

Next, the operator releases the fastening of the buckles 247 and 257 (S285). As a result, the dolly 2 of the table carriage unit 1 is disconnected from the laser processing machine 91. The operator moves the dolly 2 on which the work table 3 is placed, i.e., the table carriage unit 1, to the predetermined standby position (S29) and closes the left-leaf door 912 and the right-leaf door 913 of the double-leaf door. Due to the closing of the double-leaf door, the control unit 99 puts the laser processing machine 91 in the processing operable state (S30).

As described in detail above, the laser processing machine 91 can perform 3D processing using the pivot table unit 93, which is a 3D holding jig, and 2D processing using the work table 3, which is a 2D holding jig, without replacing the pivot table unit 93. According to this, 2D processing and 3D processing with a laser beam can be done in the single laser processing machine 91. It is also possible to easily changeover between 2D processing and 3D processing in the single laser processing machine.

In the laser processing machine 91, the changeover from 3D processing to 2D processing is done by connecting the table carriage unit 1 to the laser processing machine 91 and then moving the work table 3 into the laser processing machine 91. Since the casters 21a-21d and 311a-311d are used for this connection and movement, the operator simply pushes the work table 3, which requires very little effort. On the other hand, in the laser processing machine 91, the changeover from 2D processing to 3D processing is done by connecting the dolly 2 to the laser processing machine 91 and moving the work table 3 out of the laser processing machine 91 after the connection. Since the casters 21a-21d and 311a-311d are used for this connection and movement, the operator simply pulls the work table 3, which requires very little effort.

In the changeover from 3D processing to 2D processing, positioning for the connection of the table carriage unit 1 is done naturally by the engagement of the catcher 81 with the guide notch 252a. In addition, the positioning of the work table 3 in the right-left direction within the laser processing machine 91 is naturally done by the rod rail 956 having a hexagonal cross section on one of the pair of rails and the bobbin-shaped wheel 314 rolling on the rod rail 956. Furthermore, the positioning of the work table 3 in the front-back direction within the laser processing machine 91 is automatically done by operating the table locking device 98 to engage the protruding lock portion 981 with the lock engagement portion 37. Therefore, in the changeover from 3D processing to 2D processing, there is no need for the operator to make adjusting operations, and the changeover process is extremely simple and easy.

On the other hand, the changeover from 2D processing to 3D processing can be done simply by releasing the locking of the table locking device 98, moving the work table 3 having the casters 311a-311d to the dolly 2 having the casters 21a-21d, and removing the dolly 2 on which the work table 3 is placed from the laser processing machine 91. Thus, the changeover operation is very easy and the burden on the operator reduces further. The interlock area changeover associated with the changeover between 2D processing and 3D processing is automatically changed by the control unit 99, without the need for the operator" operation. Therefore, the burden on the operator in the changeover operation reduces further.

The laser processing system ST according to the above embodiment includes a first laser processing unit LU1 (see FIG. 8A) and a second laser processing unit LU2 (see FIG. 8B). The first laser processing unit LU1 is provided with the pivot table unit 93 that has the pivot table 931 that holds the first workpiece (three-dimensional workpiece) to be processed by the laser beam and the drive unit 932 that changes the posture of the pivot table 931 at least in its horizontal posture. The second laser processing unit LU2 is provided with the pair of rail units 94 and 95 laid parallel with the pivot table unit 93 interposed between them and the work table 3. The work table 3 has the workpiece support unit 32G or 32BG that supports the second workpiece (flat-plate workpiece) to be processed by the laser beam, the table base 31 that supports the workpiece support unit 32G or 32BG, the posts 312a-312d that support the table base 31, and the wheels 313 and 314 that support the posts 312a-312d and roll on the pair of the rail units 94 and 95, respectively. The work table 3 is configured so that only the wheels 313 and 314 are in contact with the pair of the rail units 94 and 95 when the table base 31 is installed above the pivot table unit 93. Accordingly, the laser processing system ST of the above embodiment can easily changeover between 2D processing of the flat-plate workpiece and 3D processing of the three-dimensional workpiece only with the single laser processing machine 91.

In addition, the laser processing system ST according to the above embodiment further includes the dolly 2 movable with the work table 3 placed thereon. The work table 3 is configured to be able to be loaded onto the pair of the rail units 94 and 95 from the dolly 2. According to this, the installation operation of the work table 3 into the laser processing machine 91 and the unloading operation of the work table 3 from the laser processing machine 91 become easy. Note that, especially in the above embodiment, the dolly 2 is connected to the laser processing machine 91 when the work table 3 is moved between the dolly 2 and the rail units 94 and 95.

In addition, according to the laser processing system ST in the above embodiment, one of the pair of the rail units 94 and 95 is the rod rail 956 having a hexagonal cross section, and wheels 314 rolling on the rod rail 956 have a bobbin shape corresponding to this hexagonal cross section. The work table 3 is aligned in the horizontal direction perpendicular to the rod rail 956 by the rod rail 956 and the wheels 314. According to this, no operation for positioning the work table 3 in the left-right direction (horizontal direction perpendicular to the rod rail 956) is required in the laser processing machine 91.

In addition, the laser processing system ST according to the above embodiment further includes the table locking device 98 having the protruding lock portion 981 to be protruded. The work table 3 has the lock engagement portion 37 on which the recess 371 is formed. The table locking device 98 is configured to align the work table 3 in the direction along the pair of the rail units 94 and 95 by protruding the protruding lock portion 981 to be engaged with the recess 371. According to this, no operation for positioning the work table 3 in the front-back direction (direction for its forward and backward motion along the pair of the rail units 94 and 95) is required in the laser processing machine 91.

Furthermore, the laser processing system ST according to the above embodiment further includes the control unit 99 that controls the operation of the laser processing head 92 that emits the laser beam. The control unit 99 is configured to receive operation information of the protruding lock portion 981 of the table locking device 98. When the control unit 99 determines that the protruding lock portion 981 has been engaged with the recess 371, it changes the interlock area of the laser processing head 92 to the area for processing with the work table 3. This reduces the burden on the operator because the interlock area is automatically changed in the conversion from 3D processing to 2D processing.

The laser processing system ST according to the above embodiment further includes the detection device 97 that detects the entering position of the work table 3 and the control unit 99 that controls the operation of the laser processing head 92 that emits the laser beam. The control unit 99 determines whether the position of the work table 3 detected by the detection device 97 is at the defined position for covering the pivot table unit 93. The control unit 99 changes the interlock area of the laser processing head 92 to the area for processing using the work table 3 when it determines that the work table 3 is located at the defined position. According to this, the automatic change of the interlock area can be done more reliably.

The present invention is not limited to the above embodiment and may be implemented in various embodiments with appropriate modifications. For example, the laser processing system ST may be configured such that the control unit 99 automatically turns the switch 982 of the table locking device 98 ON when the sensor detects that the table base 31 has entered the laser processing machine 91 and the its lock engagement portion 37 has reached the defined position. The laser processing system ST may further include a drive unit that drives the casters 21a-21d of the dolly 2 and the casters 311a-311d of the work table 3, so that the dolly 2 and the work table 3 are self-propelled under the control of the control unit 99.

Note that the interlock area for each of 2D processing and 3D processing is set appropriately according to the specifications of the laser processing machine 91. For example, the interlock area in 2D processing is set as an area where the height of the tip of the nozzle 92b of the laser processing head 92 is made lower than the height H32 of the top of the workpiece support unit 32 of the plate-adapted table 3A, as shown in FIG. 13. On the other hand, the interlock area in 3D processing is set as an area where the height of the tip of the nozzle 92b when the laser processing head 92 is in the posture for emitting the laser beam horizontally is made lower than the height H93 of the lower end of the pivot table 931 in the vertical posture (shown by a single-dotted line in FIG. 13).

With the interlock area in 2D processing, the control unit 99 fixes the pivot table 931 in the horizontal posture, disables the operations of the CS motor 932 and the CR motor 935, and enables the operation of the rotation drive unit 34. With the interlock area in 3D machining, the control unit 99 enables the operations of the CS motor 932 and the CR motor 935 and disables the operation of the rotation drive unit 34.

The entire contents of Japanese Patent Application No. 2023-004402 (filed on January 16, 2023) are hereby incorporated by reference. The invention is described above with reference to the embodiment of the present invention, but the invention is not limited to the above embodiment. Scope of the present invention is determined in the context of the claims.

## Claims

1. A laser processing system comprising:
a first laser processing unit provided with a pivot table unit having a pivot table that holds a first workpiece to be processed by a laser beam and a drive unit that changes a posture of the pivot table at least in a horizontal posture thereof; and
a second laser processing unit provided with a pair of rail units laid parallel with the pivot table unit interposed therebetween and a work table,
wherein the work table has a workpiece support unit that supports a second workpiece to be processed by a laser beam, a table base that supports the workpiece support unit, posts that support the table base, and wheels that roll on the pair of rail units, and
wherein the work table is configured so that only the wheels are in contact with the pair of rail units when the table base is installed above the pivot table unit.

2. The laser processing system according to claim 1, further comprising
a dolly movable with the work table placed thereon,
wherein the work table is configured to be able to be loaded onto the pair of rail units from the dolly.

3. The laser processing system according to claim 1,
wherein one of the pair of rail units is a rod rail having a hexagonal cross section and each of the wheels rolling on the rod rail has a bobbin shape corresponding to the hexagonal cross section to align the work table in a horizontal direction perpendicular to the rod rail.

4. The laser processing system according to claim 1, further comprising
a table locking device having a protruding lock portion to be protruded,
wherein the work table has a lock engagement portion on which a recess is formed, and
wherein the table locking device is configured to align the work table in a direction along the pair of rail units by protruding the protruding lock portion to be engaged with the recess.

5. The laser processing system according to claim 4, further comprising
a control unit that controls an operation of a laser processing head that emits the laser beam,
wherein the control unit is configured to receive operation information of the protruding lock portion of the table locking device, and
wherein, when the control unit determines that the protruding lock portion has been engaged with the recess, the control unit changes an interlock area of the laser processing head to an area for processing with the work table.

6. The laser processing system according to claim 1, further comprising
a detection device that detects a position of the work table along the pair of rail units; and
a control unit that controls an operation of a laser processing head that emits the laser beam, and determines whether the position of the work table detected by the detection device is at a defined position for covering the pivot table unit,
wherein the control unit changes an interlock area of the laser processing head to an area for processing using the work table when determining that the work table is located at the defined position.
